# NEUE EUROPÄISCHE PATENTSCHRIFT

(11) **EP 1 434 951 B2**
(45) Veröffentlichungstag und Bekanntmachung des Hinweises auf die Entscheidung über den Einspruch: **31.08.2011**
(45) Hinweis auf die Patenterteilung: 08.06.2005
(21) Anmeldenummer: 02781199.1
(22) Anmeldetag: 01.10.2002
(51) Int. Cl.: F16D 65/12, F16D 55/28

(54) **BREMSSCHEIBE FÜR EINE SCHEIBENBREMSE**
BRAKE DISC FOR A DISC BRAKE
DISQUE DE FREIN POUR UN FREIN A DISQUE

(30) Priorität: 02.10.2001 DE 10148681
(43) Veröffentlichungstag der Anmeldung: 07.07.2004
(73) Patentinhaber: KNORR-BREMSE Systeme für Nutzfahrzeuge GmbH, 80809 München (DE)
(72) Erfinder: BAUMGARTNER, Johann, 85368 Moosburg (DE); BIEKER, Dieter, 83080 Oberaudorf (DE)
(74) Vertreter: Specht, Peter
(86) Internationale Anmeldenummer: PCT/EP2002/011000
(87) Internationale Veröffentlichungsnummer: WO 2003/031839

(56) Entgegenhaltungen:
- EP-A- 0 364 620
- EP-A1- 0 364 620
- DE-A1- 3 814 680
- DE-C- 591 787
- FR-A- 2 807 485
- GB-A- 2 013 804
- US-A- 3 773 153
- US-A- 4 273 218
- US-A- 5 109 690
- US-A- 5 109 960

## Beschreibung

Die vorliegende Erfindung betrifft eine Bremsscheibe für eine Scheibenbremse, insbesondere für eine Scheibenbremse für Nutzfahrzeuge, gemäß dem Oberbegriff des Anspruchs 1. Eine derartige Bremsscheibe ist aus der DE 3 814 680 A bekannt. Eine weitere Bremsscheibe ist aus der GB-A-2 013 804 bekannt.

Scheibenbremsen für Fahrzeuge sind beispielsweise als Schiebesattelscheibenbremsen, Schwenksattelscheibenbremsen oder Festsattelscheibenbremsen bekannt. Im Bereich der Nutzfahrzeuge hat sich insbesondere die Schiebesattelscheibenbremse als Standard durchgesetzt, bei welcher der Schiebesattel verschieblich an einem starr an der Radachse befestigten Bremsträger gelagert ist. Schiebesattel- oder Schwenksattelscheibenbremsen benötigen ein achsfestes Bauteil, den Bremsträger, der bei Bremsbetätigung die Umfangskräfte der Bremsbacken mit den Bremsbelägen aufnimmt sowie den zur Fahrzeugachse verschiebbar bzw. verschwenkbar gelagerten Bremssattel hält.

Wird anstelle eines Schiebesattels ein Festsattel eingesetzt, kann die Bremsscheibe als Schiebescheibe ausgelegt werden, welche axial auf der Radachse verschieblich gelagert ist. Bei Bremsungen wird sie von einem Bremsbelag zunächst kontaktiert und dann gegen den auf der gegenüberliegenden Seite der Bremsscheibe angeordneten Bremsbelag geschoben. Dabei werden i.allg. die Krafterzeugung - d.h. die Zuspanneineirchtung - und eine Verschleiß-Nachstelleinrichtung auf der einen Seite der Bremsscheibe angeordnet. Mit zunehmendem Verschleiß wird die Bremsscheibe ferner zum Ausgleich des Bremsbelagverschleisses langsam auf der Radachse axial verschoben.

Die Relativbewegung, welche die Schiebescheibe insofern zu überbrücken hat, läßt sich in einen Arbeits- und einen Verschleißhub unterteilen.

Der Arbeitshub wird bei jeder Bremsbetätigung ausgeführt, um das Lüftspiel der Bremse zu überwinden und die bei der Kraftaufbringung entstehenden Elastizitäten der Bremsbeläge und des Bremssattels auszugleichen.

Der Verschleißhub hingegen ist der Verschleißnachstellweg, den der Bremssattel über eine große Anzahl von Bremsbetätigungen ausführt, um den Verschleiß an der Reaktionsseite der Bremse auszugleichen. Der Verschleißhub setzt sich aus dem Verschleiß des außen liegenden Bremsbelages und der außen liegenden Bremsscheibenreibfläche zusammen und beträgt üblicherweise 20-25 mm, während der zuvor genannte Arbeitshub, also der Verschiebeweg zur Überwindung des Lüftspiels nur einige wenige mm beträgt.

Wird auf jeder Seite der Bremsscheibe wenigstens eine Nachstellvorrichtung angeordnet, z. B. jeweils wenigstens eine oder mehrere elektromotorisch betriebene Nachstell-Dreheinrichtung(en), welche Druckstücke in Richtung der Bremsbeläge verschiebt/verschieben, ist auf jeder Seite der Bremsscheibe der Abstand zwischen dem Bremsbelag und der Bremsscheibe verstellbar.

Auf diese Weise ist lediglich noch eine Verschiebbarkeit der Bremsscheibe zur Überwindung des Lüftspieles und zum Ausgleich der elastischen Verformung der Bremsbeläge und des Bremssattels, also der genannte Arbeitshub, zu realisieren. Das Schiebelager braucht entsprechend nur noch einen entsprechend deutlich kürzeren Verschiebeweg aufzuweisen.

Zwar stellt der Einsatz eines solchen Nachstellsystemes mit wenigstens einer oder mehreren Nachstelleinrichtungen auf jeder axialen Seite der Bremsscheibe schon eine erhebliche Verbesserung dar, jedoch ist durch die nach wie vor axiale Verschiebbarkeit der Scheibenbremse, wenn auch in einem geringeren Maß, zu realisieren. So führt die häufige Betätigung, wie sie für den Einsatz einer Scheibenbremse in einem Nutzfahrzeug typisch ist, aufgrund der einwirkenden Kräfte dauerhaft zu einem Verschleiß der Schiebeführung, mit der die Bremsscheibe auf der Nabe geführt ist, mit der Folge einer Schwergängigkeit, die entsprechende Wartungsarbeiten erforderlich macht.

Naturgemäß ist dies mit Kosten verbunden, die sich sowohl aus den Wartungsarbeiten als auch aus den notwendigen Betriebsunterbrechungen ergeben.

Der vorliegenden Erfindung liegt daher die Aufgabe zugrunde, die Bremsscheibe der gattungsgemäßen Art so weiterzuentwickeln, daß mit konstruktiv einfachen Mitteln eine höhere Standzeit erzielbar ist.

Diese Aufgabe wird durch eine Bremsscheibe mit den Merkmalen des Anspruchs 1 gelöst.

Durch die Anordnung des Anschlußteiles in dem zwischen den beiden Reibringen gebildeten Lüftkanal kann eine relativ große Biegelänge des Anschlußteiles erreicht werden, wodurch dieses zur Übertragung des Bremsmomentes ausreichend dimensioniert werden kann, ohne daß das elastische Anschlußteil die Auslenkung der Bremsscheibe und damit die Funktion der Bremse beeinträchtigt. So könnte ein zu hoher Auslenkwiderstand eine ungleiche Beanspruchung der beiden Bremsscheibenseiten und damit einen ungleichen Bremsenverschleiß zur Folge haben.

Danach ist die Einrichtung zur Realisierung der axialen Beweglichkeit der Reibringe als an den Reibringen angeordnetes und/oder mit diesen verbundenes Anschlußteil zur Befestigung der Bremsscheibe an der Radnabe und/oder ―achse ausgelegt, welches separat zu den Reibringen ausgebildet und relativ zu den Reibringen elastisch verformbar ist.

Durch diese einfache konstruktive Ausbildung wird eine elastische Anbindung der Bremsscheibe an die Radnabe und/oder -achse geschaffen, die in vorteilhafter Weise ohne eine axiale Verschiebbarkeit bzw. ein Lager zwischen Bremsscheibe und Radnabe und/oder -achse auskommt.

Da die Bremsscheibe insoweit fest, jedoch nicht starr mit der Nabe verbunden ist, entfallen auch die für eine axiale Verschiebung notwendigen Verschleißteile. Daraus ergibt sich eine erheblich geringere Störanfälligkeit mit entsprechend gegenüber dem Stand der Technik gesenkten Wartungs- und Betriebskosten.

Vorzugsweise weist das ein- oder mehrstückige Anschlußteil relativ zur Radachse eine radiale Erstreckung auf und ist relativ zu den Reibringen axial elastisch verformbar. Erfindungsgemäß ist das Anschlußteil relativ zu den Reibringen und der Radachse derart axial elastisch verformbar, daß durch die elastische Verfombarkeit eine axiale Beweglichkeit der Reibringe relativ zur Radachse realisiert ist, welche dem Betrag des Arbeitshubes einer Scheibenbremse entspricht.

Die Bremsscheibe eignet sich damit u.a. für Festsattelbremsen, welche Nachstelleinrichtungen auf jeder Seite der Bremsscheibe aufweisen, denn bei derartigen Bremsen muß lediglich noch eine derartige axiale Auslenkbarkeit der Bremsscheibe gewährleistet sein, daß der Arbeitshub ausgeglichen wird. Ggf. kann ergänzend eine geringe elastische Auslenkbarkeit des Bremssattels mit der elastischen Auslenkbarkeit der erfindungsgemäßen Bremsscheibe kombiniert werden.

Nach der Erfindung ist vorgesehen, daß das Anschlußteil zwischen den beiden Reibringen angeordnet ist und mit diesen vorzugsweise im äußeren Umfangsbereich fest verbunden ist.

Um eine ausreichende Elastizität zu erhalten, ist das aus einem federnden Material, vorzugsweise aus einem Federstahl bestehende Anschlußteil mit Ausnehmungen versehen, durch die, je nach Form und Anzahl, eine definierte Rückstellkraft erreichbar bzw. einstellbar ist.

Das Anschlußteil wird nur bereichs- bzw. teilweise mit den Reibringen verbunden und ist im übrigen diesen gegenüber beweg- d. h. auslenkbar.

Im übrigen ist die Erfindung dazu geeignet, bei Einbauverhältnissen der Bremsscheibe mit einem nur geringen Abstand zwischen dem Bremsscheibeninnendurchmesser und dem Nabenaußendurchmesser eine ausreichend große Auslenkbewegung der Bremsscheibe zu erzielen bei geringen Rückstellkräften. Andererseits erlaubt die elastische Anbindung die Übertragung von hohen Bremsmomenten der Bremsscheibe auf die Nabe.

Das Anschlußteil kann vielfältig ausgebildet sein. So besteht eine Möglichkeit darin, bei einem Verbundgußverfahren zur Herstellung der Bremsscheibe das ringförmige Anschlußteil in einen Gießkern, der der Erzeugung des Lüftkanals der Bremsscheibe dient, einzubetten. Dabei ist der Gießkern so beschaffen, daß das Vergußmaterial außen liegende Durchbrechungen des Anschlußteiles durchtritt, so daß hier das Anschlußteil an den beiden gegossenen und miteinander verbundenen Reibringen befestigt ist.

Des weiteren kann das aus einem Federblech bestehende Anschlußteil zwischen den beiden Reibringen plaziert sein und zwar so, daß es, im Querschnitt gesehen, etwa in der Mitte des Lüftkanals, also mit gleichem Abstand zu den jeweils benachbarten Reibringen angeordnet ist.

Das Anschlußteil wird in diesem Fall in den Verbindungsbereichen im äußeren Umfangsbereich zwischen den beiden Reibringen radial gesichert gehalten, wobei diese durch Vernieten, Verschrauben, Verschweißen oder eine ähnliche Verbindungsmethode miteinander verbunden sind.

Zur Erhöhung der Elastizität in Druckrichtung der Bremsscheibe kann das Anschlußteil auch als Lamellenkörper ausgebildet sein und aus mehreren dünnen, aufeinandergeschichteten Einzelblechen bestehen.

Auch besteht die Möglichkeit, das Anschlußteil aus einer Vielzahl von einzelnen Ringsegmenten herzustellen, die in ihren jeweiligen gemeinsamen Stoßbereichen mit miteinander korrespondierenden Profilen versehen sind, wodurch eine Vereinfachung der Montage und eine optimierte Umfangskraftübertragung möglich sind.

Anstelle vieler Ringsegmente, die gemeinsam einen geschlossenen Ring ergeben, kann das Anschlußteil auch aus einer Vielzahl von Einzelelementen bestehen, die jeweils einerseits im Umfangsbereich an der Bremsscheibe im Lüftspalt befestigt und andererseits mit der Nabe verbunden sind. Dabei können die Einzelelemente im Sinne von Speichen ausgebildet und angeordnet sein und jeweils aus einem im Querschnitt flachen oder runden Federstahl bestehen.

Es wird eine Bremsscheibe für eine Scheibenbremse, insbesondere für Nutzfahrzeuge, geschaffen, die aus zwei abständig angeordneten, dabei einen Lüftspalt bildenden, miteinander verbundenen Reibringen besteht und die verdrehsicher an einer Radnabe und/oder -achse angeschlossen ist, derart, daß sie mittels eines separaten, sich radial erstreckenden Anschlußteiles in Achsrichtung der Nabe elastisch auslenkbar an dieser befestigt ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Querschnitt durch eine Scheibenbremse,
- Figur 2: einen Teilschnitt durch eine Bremsscheibe der Scheibenbremse in perspektivischer Ansicht,
- Figur 3: ein weiteres Ausführungsbeispiel einer Bremsscheibe ebenfalls in einem Teilschnitt und perspektivisch dargestellt,
- Figur 4: eine vergrößerte Ansicht der Scheibenbremse gesehen in Richtung des Pfeiles IV in Figur 2,
- Fig. 5+6: jeweils verschiedene Ausführungsbeispiele einer Scheibenbremse in einer geschnittenen Draufsicht.

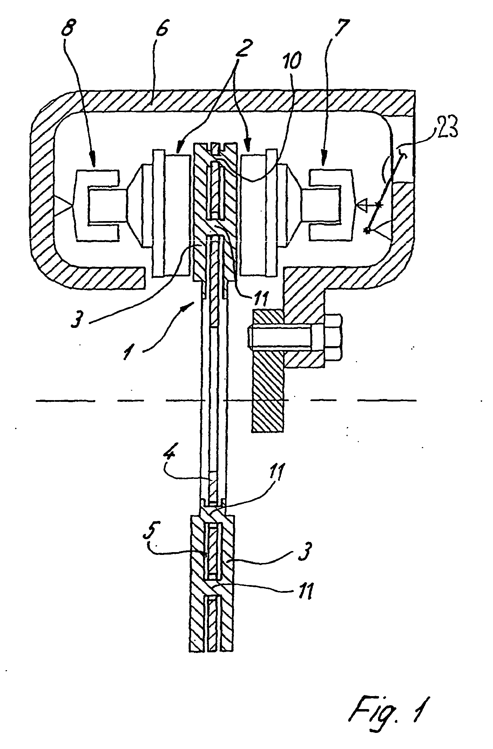

In der Figur 1 ist eine Scheibenbremse, insbesondere für Nutzfahrzeuge, dargestellt, die einen als Festsattel ausgebildeten Bremssattel 6 aufweist, der eine Bremsscheibe 1 in ihrem oberen Umfangsbereich umfaßt. Wie zu erkennen, besteht die Bremsscheibe 1 aus zwei voneinander beabstandet angeordneten, dabei zwischen sich einen Lüftspalt 5 ausbildenden Reibringen 3, die fest miteinander verbunden sind.

An beiden axialen Seiten der Bremsscheibe 1 sind in Richtung der Bremsscheibe 1 zum Ausgleich von Verschleiß ver- bzw. nachstellbare Bremsbacken 2 angeordnet.

Jede Bremsbacke 2 ist mit einem Bremsbelag versehen, der im Funktionsfall die Bremsscheibe 1 kontaktiert. Dazu wird mit Hilfe einer einen Drehhebel 23 aufweisenden Zuspanneinrichtung die in Fig. 1 rechte Bremsbacke in Richtung der Bremsscheibe 1 bewegt. Sodann wird von der rechten Bremsbacke 2 die Bremsscheibe 1 im äußeren Bereich der Reibringe 3 der Bremsscheibe 1 axial in Richtung der linken Bremsbacke 2 verschoben, so daß ein Reibschluß zwischen den beiden Brembacken 2 und der Bremssscheibe 1 erzielt wird. Nach der Bremsung bewegen sich die rechte Bremsbacke - z.B. durch die Wirkung einer Rückstellfeder, hier nicht dargestellt - und die Reibringe der Bremsscheibe 1 in die Ausgangsstellung zurück.

Zum Nachstellen der Bremsbacken 2 bei einem Verschleiß der Bremsbeläge ist jeder Bremsbacke 2 wenigstens eine Nachstelleinrichtung 7, 8 versehen, durch welche die jeweilige Bremsbacke 2 in Richtung der Bremsscheibe 1 entsprechend zugestellt wird.

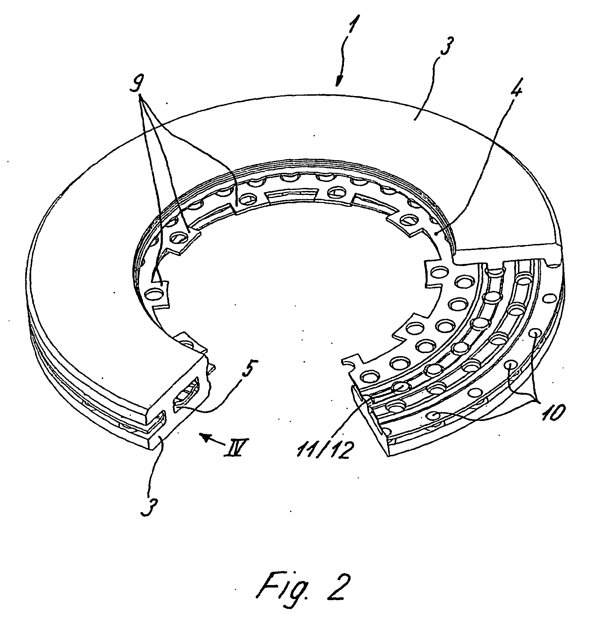

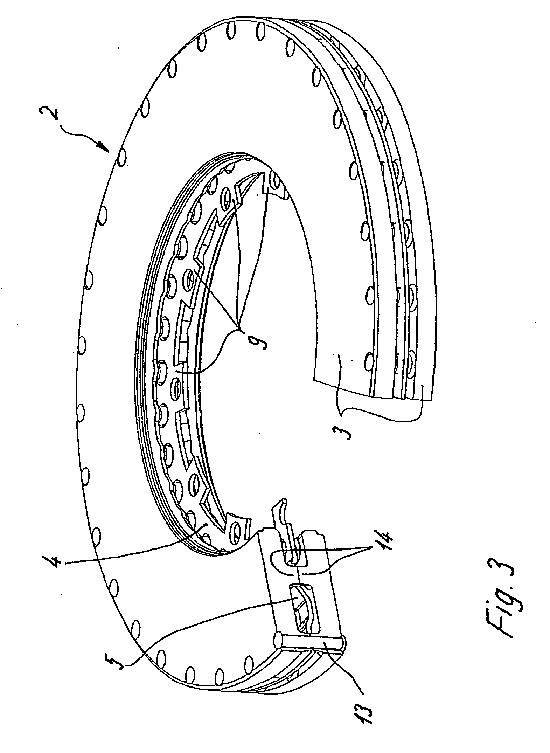

In dem Lüftspalt 5 ist ein radial sich erstreckendes, an der Nabe befestigtes Anschlußteil 4 plaziert, das mittels Befestigungslaschen 9 (Figuren 2 und 3) elastisch auslenkbar an der Nabe befestigt ist.

Bei dem in der Figur 2 gezeigten Ausführungsbeispiel wird das Anschlußteil 4 aus einem einstückigen, aus Federblech hergestellten Ring gebildet, der mittels Stegen 10 im äußeren Umfangsbereich der Bremsscheibe 1 an den Reibringen 3 befestigt ist und somit radial fixiert ist. Der übrige Flächenbereich des Anschlußteiles 4, der weitgehend durch die Reibringe 3 überdeckt ist, ist diesen gegenüber im Lüftspalt 5 axial bewegbar.

Bei dem in der Figur 2 gezeigten Beispiel wird das Anschlußteil 4 bei der Herstellung der Bremsscheibe 1 als Gußteil gleich mit eingegossen. Dabei wird das Anschlußteil 4 in einen Kern eingebettet, der den Raum des Lüftspaltes 5 vorgibt und der so ausgebildet ist, daß er einerseits den Guß der Stege 10 durch die entsprechend vorgesehenen Öffnungen in dem Anschlußteil 4 zuläßt, wodurch eine formschlüssige Verbindung zwischen der Bremsscheibe 1 und dem Anschlußteil 4 erreicht wird, und andererseits als Zapfen ausgebildete Stege 11, die auf den einander zugewandten Flächen der Reibringe 3 vorgesehen sind, durch Durchbrechungen 12 des Anschlußteiles 4 derart führt, daß einerseits eine feste Verbindung zwischen den beiden Reibringen 3 entsteht und andererseits eine einwandfreie axiale Bewegbarkeit des Anschlußteiles 4 möglich ist.

Bei dem in der Figur 3 dargestellten Beispiel sind die beiden Reibringe 3 als separate Teile ausgebildet und durch Nieten miteinander verbunden, wozu im äußeren Randbereich Nietbolzen 13 vorgesehen sind, die sowohl die Reibringe 3 wie auch das Anschlußteil 13 durchtreten. Ebenso wie die gegossenen Stege 10 sind die Nietbolzen 13 eng in den entsprechenden Öffnungen des Anschlußteiles geführt.

Im übrigen Flächenbereich der Reibringe 3 sind auf den einander zugewandten Seiten Distanzzapfen 14 vorgesehen, die aneinander liegen und durch die die Höhe des Lüftspaltes 5 bestimmt wird, innerhalb dessen das Anschlußteil 4 axial auslenkbar gehalten ist. In diesem Ausführungsbeispiel sind, ebenso wie bei dem in der Figur 2 gezeigten, die Durchmesser der Distanzzapfen 14 bzw. der Stege 11 kleiner als der zugeordnete Durchmesser der Durchbrechungen 12.

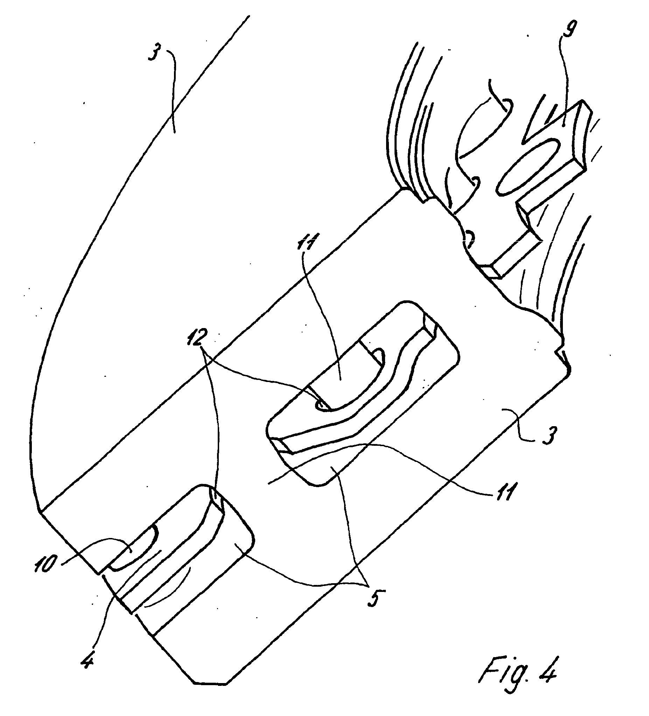

Dies ist besonders deutlich in der Figur 4 erkennbar, in der eine vergrößerte Schnittansicht des Ausführungsbeispieles nach der Figur 2 dargestellt ist.

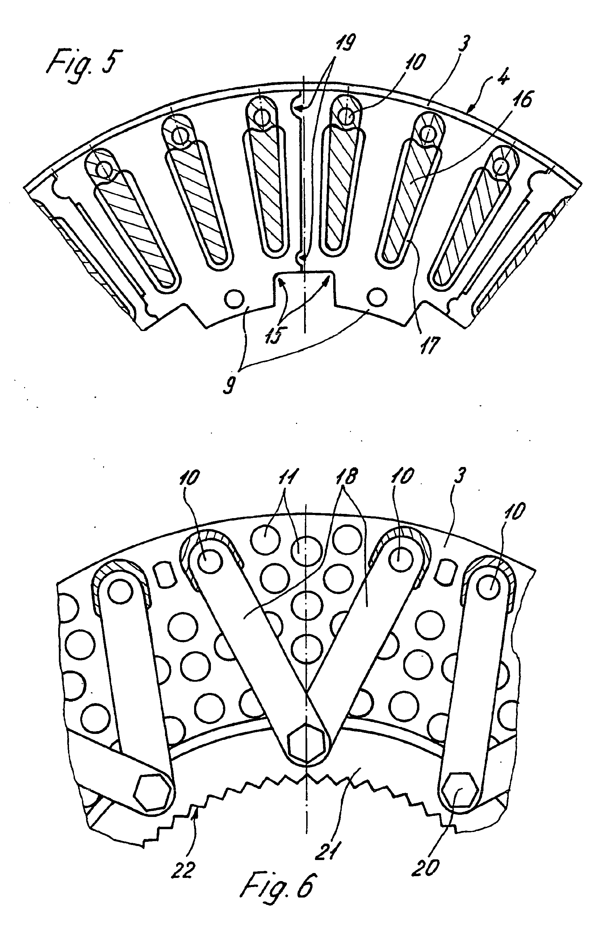

Während die Figuren 2 und 3 das Anschlußteil 4 als einstückigen Ring wiedergeben, ist in der Figur 5 eine Ausführungsvatiante gezeigt, bei der das Anschlußteil 4 aus einer Vielzahl von Ringsegmenten 15 besteht, die an ihren einander zugewandten Seiten mit formschlüssig ineinandergreifenden Profilierungen 19 versehen sind. Die Befestigung der Ringsegmente 15 an den Reibringen 3 erfolgt auch hier im Bereich der Stege 10, durch die eine radiale und im Bedarfsfall axiale Fixierung im äußeren Umfangsbereich der Bremsscheibe 1 erreicht wird.

Zur Bildung des Lüftspaltes sind hier radial sich erstreckende Distanzrippen 16 an den beiden Reibringen 3 angeformt, die bei der Herstellung als Gußteil einstückig sind, während sie bei einer separaten Fertigung der Reibringe 3 an jedem Reibring 3 vorgesehen sind und ebenso wie bei dem in der Figur 3 gezeigten Beispiel aneinander liegen.

Die Distanzrippen 16 werden durch Ausnehmungen 17 der Ringsegmente 15 geführt, wobei diese Ausnehmungen 17 in ihrer Kontur etwa der Kontur der zugeordneten Distanzrippe 16 entsprechen, jedoch in ihren Grundflächenabmaßen größer sind, so daß eine freie axiale Bewegbarkeit des Anschlußteiles 4 innerhalb des Lüftspaltes 5 gewährleistet ist.

Ein weiteres Ausführungsbeispiel ist in der Figur 6 gezeigt. Dabei besteht das Anschlußteil 4 aus einer Vielzahl von Speichen 18, die aus einem Federstahl gebildet sind und einen, je nach Erfordernis, unterschiedlichen Querschnitt aufweisen können, beispielsweise rund oder rechteckig.

Die Speichen 18 sind jeweils paarweise montiert und V-förmig zueinander stehend angeordnet. Dabei ist jede Speiche 18 im äußeren Randbereich der Bremsscheibe 1 an den Reibringen 3 befestigt und zwar ebenso an den Stege 10 bzw. Nietbolzen 13 wie in den übrigen gezeigten Ausführungsbeispielen.

Gegenüberliegend sind die beiden Speichen 18 jedes Speichenpaares gemeinsam über einen Anschluß 20 mit einem Innenring 21 verbunden, der eine innere Verzahnung 22 aufweist, die zur Übertragung des Bremsmoments formschlüssig in die Radnabe und/oder -achse eingreift.

Hier sind ebenfalls Stege 11 zu erkennen, die außerhalb des Überdeckungsbereiches der Speichen 18 angeordnet sind und die die beiden Reibringe 3, unter Überbrückung des Lüftspaltes 5, miteinander verbinden bzw. als Distanzzapfen 14 einen Abstand der Reibringe 3 zur Bildung des Lüftspaltes 5 herstellen.

### Bezugszeichenliste

- 1: Bremsscheibe
- 2: Bremsbacke
- 3: Reibring
- 4: Anschlußteil
- 5: Lüftspalt
- 6: Bremssattel
- 7: Nachstelleinrichtung
- 8: Nachstelleinrichtung
- 9: Befestigungslasche
- 10: Stege
- 11: Stege
- 12: Durchbrechung
- 13: Nietbolzen
- 14: Distanzzapfen
- 15: Ringsegment
- 16: Distanzrippe
- 17: Ausnehmung
- 18: Speiche
- 19: Profilierung
- 20: Anschluß
- 21: Innenring
- 22: Verzahnung
- 23: Drehhebel

## Patentansprüche

1. Bremsscheibe (1) für eine Scheibenbremse, insbesondere für eine Scheibenbremse für Nutzfahrzeuge, die folgendes aufweist:
a. zwei fest miteinander verbundene Reibringe (3), zwischen denen ein Lüftspalt (5) ausgebildet ist,
b. eine Einrichtung zur Realisierung einer axialen Beweglichkeit der Reibringe (3) relativ zur Radnabe und/oder -achse,
c. wobei die Einrichtung zur Realisierung der axialen Beweglichkeit der Reibringe (3) als an den Reibringen angeordnetes und/oder mit diesen verbundenes Anschlußteil (4) zur Befestigung der Bremsscheibe an der Radnabe und/oder -achse ausgelegt ist, welches separat zu den Reibringen (3) ausgebildet und relativ zu diesen elastisch verformbar ist,
d. wobei das Anschlußteil (4) relativ zu den Reibringen und der Radachse derart axial elastisch verformbar ist, daß durch die elastische Verformbarkeit eine axiale Beweglichkeit der Reibringe relativ zur Radachse realisiert ist, welche dem Betrag des Arbeitshubes einer Scheibenbremse entspricht, und
e. wobei das Anschlußteil (4) im Lüftspalt (5) angeordnet und darin radial fixiert ist,
**dadurch gekennzeichnet, dass**
f. das Anschlußteil (4) ferner im Lüftspalt axial auslenkbar gehalten ist.

2. Bremsscheibe nach Anspruch 1, **dadurch gekennzeichnet, daß** das Anschlußteil (4) eine relativ zur Radachse radiale Erstreckung aufweist und relativ zu den Reibringen axial elastisch verformbar ist.

3. Bremsscheibe nach Anspruch 1 oder 2, **dadurch gekennzeichnet, daß** das Anschlußteil (4) ein-oder mehrstückig ausgebildet ist.

4. Bremsscheibe nach einem der vorstehenden Ansprüche, **dadurch gekennzeichnet, daß** das Anschlußteil (4) aus Federblech besteht.

5. Bremsscheibe nach einem der vorstehenden Ansprüche, **dadurch gekennzeichnet, daß** das Anschlußteil (4) im äußeren umfänglichen Randbereich mit den Reibringen (3) fest verbunden ist.

6. Bremsscheibe nach einem der vorstehenden Ansprüche, **dadurch gekennzeichnet, daß** das Anschlußteil (4) an seinem der Nabe zugewandten Umfangsbereich mit Befestigungslaschen (9) versehen ist, mit denen die Bremsscheibe (1) an der Nabe befestigbar ist.

7. Bremsscheibe nach einem der vorstehenden Ansprüche, **dadurch gekennzeichnet, daß** das Anschlußteil (4) teilweise von den Reibringen (3) überdeckt ist.

8. Bremsscheibe nach einem der vorstehenden Ansprüche, **dadurch gekennzeichnet, daß** das Anschlußteil (4) ringförmig ausgebildet ist.

9. Bremsscheibe nach einem der vorstehenden Ansprüche, **dadurch gekennzeichnet, daß** das Anschlußteil (4) aus Ringsegmenten (15) besteht.

10. Bremsscheibe nach einem der vorstehenden Ansprüche, **dadurch gekennzeichnet, daß** die Ringsegmente (15) auf ihren einander zugewandten Seiten mit formschlüssig ineinander greifenden Profilierungen (19) versehen sind.

11. Bremsscheibe nach einem der vorstehenden Ansprüche, **dadurch gekennzeichnet, daß** das Anschlußteil (4) als Lamellenkörper ausgebildet ist, der aus einer Vielzahl von aufeinander geschichteten Einzelblechen besteht.

12. Bremsscheibe nach einem der vorstehenden Ansprüche, **dadurch gekennzeichnet, daß** das Anschlußteil (4) aus einer Vielzahl von Speichen (18) besteht.

13. Bremsscheibe nach einem der vorstehenden Ansprüche, **dadurch gekennzeichnet, daß** jeweils zwei Speichen (18) als Speichenpaar angeordnet sind, die V-förmig zueinander stehen und getrennt im äußeren Randbereich der Reibringe (3) gemeinsam im Bereich der Nabe befestigt sind.

14. Bremsscheibe nach einem der vorstehenden Ansprüche, bei der Reibringe als einstückiges Gussteil ausgebildet sind, **dadurch gekennzeichnet, daß** das Anschlußteil (4) vor dem Gießen in einen den Luftspalt (5) bildenden Kern eingebettet ist.

15. Bremsscheibe nach einem der vorstehenden Ansprüche, **dadurch gekennzeichnet, daß** das Anschlußteil (4) in umfänglich an den Reibringen (3) vorgesehenen Stegen (10) radial und/oder axial fixiert gehalten ist.

16. Bremsscheibe nach einem der vorstehenden Ansprüche, **dadurch gekennzeichnet, daß** die Reibringe (3) durch Stege (11, 16) miteinander verbunden sind, wobei die Stege durch Durchbrechungen (12) und/oder durch Ausnehmungen (17) geführt sind, die in ihrer Kontur dem zugeordneten Stegen (11) entsprechen und in ihren Abmaßen größer sind als die Stege (11, 16).

17. Bremsscheibe nach einem oder mehreren der vorstehenden Ansprüche, **dadurch gekennzeichnet, daß** die Reibringe (3) im äußeren Umfangsbereich miteinander vernietet sind, wobei das Anschlußteil (4) durch die Nietbolzen (13) radial fixiert ist.

## Claims

1. Brake disc (1) for a disc brake, in particular for a disc brake for commercial vehicles, comprising the following:
a. two friction rings (3) which are permanently joined to each other and between which a clearance (5) is formed,
b. a device for implementing an axial mobility of the friction rings (3) relative to the wheel hub and/or the wheel axle,
c. wherein the device for implementing the axial mobility of the friction rings (3) is designed as a connecting part (4) located on and/or joined to the friction rings for securing the brake disc to the wheel hub and/or the wheel axle, which connecting part is separate from the friction rings (3) and elastically deformable relative thereto,
d. wherein the connecting part (4) is elastically deformable relative to the friction rings and the wheel axle in such a way that the elastic deformability results in an axial mobility of the friction rings relative to the wheel axle which corresponds to the amount of the working stroke of a disc brake, and
e. the connecting part (4) is located in the clearance (5) and radially fixed therein, **characterised in that**
f. the connecting part (4) is further held in the clearance in an axially deflectable manner.

2. Brake disc according to claim 1, **characterised in that** the connecting part (4) extends radially relative to the wheel axle and is elastically deformable relative to the friction rings.

3. Brake disc according to claim 1 or 2, **characterised in that** the connecting part (4) is designed as a single piece or in several pieces.

4. Brake disc according to any of the preceding claims, **characterised in that** the connecting part (4) is made of spring sheet metal.

5. Brake disc according to any of the preceding claims, **characterised in that** the connecting part (4) is permanently joined to the friction rings (3) in the outer circumferential edge region.

6. Brake disc according to any of the preceding claims, **characterised in that** the connecting part (4) is provided in its circumferential regions which face the hub with fastening tabs (9) by means of which the brake disc (1) can be secured to the hub.

7. Brake disc according to any of the preceding claims, **characterised in that** the connecting part (4) is partially covered by the friction rings (3).

8. Brake disc according to any of the preceding claims, **characterised in that** the connecting part (4) is annular.

9. Brake disc according to any of the preceding claims, **characterised in that** the connecting part (4) consists of annular segments (15).

10. Brake disc according to any of the preceding claims, **characterised in that** the annular segments (15) are provided with positively engaging profilings (9) on the sides which face one another.

11. Brake disc according to any of the preceding claims, **characterised in that** the connecting part (4) is designed as a lamellar body consisting of a plurality of individual sheets stacked on top of one another.

12. Brake disc according to any of the preceding claims, **characterised in that** the connecting part (4) consists of a plurality of spokes (18).

13. Brake disc according to any of the preceding claims, **characterised in that** two spokes (18) each are arranged as a pair of spokes which extend in a V-shape relative to each other and are separately secured in the outer region of the friction rings (3) in a common region of the hub.

14. Brake disc according to any of the preceding claims, wherein friction rings are designed as a single-piece casting, **characterised in that** the connecting part (4) is embedded into a core which forms the clearance before casting.

15. Brake disc according to any of the preceding claims, **characterised in that** the connecting part (4) is radially and/or axially fixed in webs (10) provided on the circumference of the friction rings (3).

16. Brake disc according to any of the preceding claims, **characterised in that** the friction rings (3) are joined to each other by webs (11, 16), the webs being guided through openings (12) and/or through recesses (17) which correspond in their contours to the associated webs (11) and which have larger dimensions than the webs (11, 16).

17. Brake disc according to one or more of the preceding claims, **characterised in that** the friction rings (3) are riveted to each other in the outer circumferential region, the connecting part (4) being radially fixed by rivets (13).

## Revendications

1. Disque (1) de frein pour un frein à disque, en particulier pour un frein à disque pour véhicules utilitaires, qui comporte les éléments suivants :
a) deux anneaux (3) de friction reliés entre eux, entre lesquels est formée une fente (5) d'aération,
b) un dispositif pour réaliser une mobilité axiale des anneaux (3) de friction par rapport au moyeu et/ou à l'axe de roue,
c) dans lequel le dispositif pour réaliser la mobilité axiale des anneaux (3) de friction est conçu sous la forme d'une pièce (4) de raccordement, disposée sur les anneaux de friction et/ou reliée à ces derniers, destinée à la fixation du disque de frein sur le moyeu et/ou l'axe de roue, pièce qui est réalisée séparément des anneaux (3) de friction et qui est élastiquement déformable par rapport à ces derniers,
d) dans lequel la pièce (4) de raccordement est élastiquement déformable axialement par rapport aux anneaux de friction et à l'axe de roue de telle sorte que, par la faculté de déformation élastique, on réalise une mobilité axiale des anneaux de friction par rapport à l'axe de roue qui correspond au montant de la course de travail d'un frein à disque,
e) dans lequel que la pièce (4) de raccordement est disposée dans la fente (5) d'aération et y est fixée radialement,
**caractérisé en ce que**
f) la pièce (4) de raccordement est en outre maintenue dans la fente d'aération avec possibilité d'excursion axiale.

2. Disque de frein suivant la revendication 1, **caractérisé en ce que** la pièce (4) de raccordement possède une étendue radiale par rapport à l'axe de roue et est élastiquement déformable axialement par rapport aux anneaux de friction.

3. Disque de frein suivant la revendication 1 ou 2, **caractérisé en ce que** la pièce (4) de raccordement est réalisée en une ou plusieurs parties.

4. Disque de frein suivant l'une des revendications précédentes, **caractérisé en ce que** la pièce (4) de raccordement est constituée de tôle élastique.

5. Disque de frein suivant l'une des revendications précédentes, **caractérisé en ce que** la pièce (4) de raccordement est fixement assemblée aux anneaux (3) de friction dans la région du bord périphérique extérieur.

6. Disque de frein suivant l'une des revendications précédentes, **caractérisé en ce que** la pièce (4) de raccordement est pourvue, dans sa région périphérique tournée vers le moyeu, de pattes (9) de fixation par lesquelles le disque (1) de frein peut être fixé sur le moyeu.

7. Disque de frein suivant l'une des revendications précédentes, **caractérisé en ce que** la pièce (4) de raccordement est partiellement recouverte par les anneaux (3) de friction.

8. Disque de frein suivant l'une des revendications précédentes, **caractérisé en ce que** la pièce (4) de raccordement est réalisée de forme annulaire.

9. Disque de frein suivant l'une des revendications précédentes, **caractérisé en ce que** la pièce (4) de raccordement est constituée de segments (15) d'anneau.

10. Disque de frein suivant l'une des revendications précédentes, **caractérisé en ce que** les segments (15) d'anneau sont pourvus, sur leurs faces en vis-à-vis, de profilages (19) s'interpénétrant les uns dans les autres à complémentarité de forme.

11. Disque de frein suivant l'une des revendications précédentes, **caractérisé en ce que** la pièce (4) de raccordement est réalisée sous la forme d'un corps lamellaire, qui est constitué d'une pluralité de tôles individuelles superposées.

12. Disque de frein suivant l'une des revendications précédentes, **caractérisé en ce que** la pièce (4) de raccordement est constituée d'une pluralité de rayons (18).

13. Disque de frein suivant l'une des revendications précédentes, **caractérisé en ce que** deux rayons (18) sont chaque fois disposés sous la forme d'une paire de rayons, dont les rayons sont placés en V l'un part rapport à l'autre et sont fixés séparément dans la région du bord extérieur des anneaux (3) de friction et conjointement dans la région du moyeu.

14. Disque de frein suivant l'une des revendications précédentes, dans lequel les anneaux de friction sont réalisés sous la forme d'une pièce moulée en fonte d'un seul tenant, **caractérisé en ce que** la pièce (4) de raccordement est, avant le moulage, insérée dans un noyau formant la fente (5) d'aération.

15. Disque de frein suivant l'une des revendications précédentes, **caractérisé en ce que** la pièce (4) de raccordement est maintenue en étant immobilisée radialement et/ou axialement dans des nervures (10) prévues périphériquement sur les anneaux (3) de friction.

16. Disque de frein suivant l'une des revendications précédentes, **caractérisé en ce que** les anneaux (3) de friction sont reliés entre eux par des nervures (11, 16), les nervures étant dirigées à travers des percements (12) et/ou à travers des évidements (17) dont le contour correspond aux nervures (11) associées et dont les dimensions sont plus grandes que celles des nervures (11, 16).

17. Disque de frein suivant l'une ou plusieurs des revendications précédentes, **caractérisé en ce que** les anneaux (3) de friction sont mutuellement assemblés par rivetage dans la région périphérique extérieure, la pièce (4) de raccordement étant immobilisée radialement par les boulons (13) rivés.
